# EUROPEAN PATENT SPECIFICATION

(11) **EP 2 964 524 B1**
(45) Date of publication and mention of the grant of the patent: **27.06.2018**
(21) Application number: 13876877.5
(22) Date of filing: 19.04.2013
(51) Int. Cl.: B64C 19/02

(54) **HYBRID AIRCRAFT AND METHOD FOR IN FLIGHT OPERATION**
HYBRID-FLUGZEUG UND BETRIEBSVERFAHREN WÄHREND DES FLUGES
AVION HYBRIDE ET PROCÉDÉ DE FONCTIONNEMENT EN VOL

(30) Priority: 05.03.2013 US 201313785605; 05.03.2013 US 201313785737
(43) Date of publication of application: 13.01.2016
(73) Proprietor: Embry-Riddle Aeronautical University, Daytona Beach, FL 32114 (US)
(72) Inventor: ANDERSON, Richard, Daytona Beach, FL 32114 (US); COSTELLO, Lori, Redondo Beach CA 90277 (US); EASTLAKE, Charles, N., Daytona Beach, FL 32114 (US); GONITZKE, Matt, Andover, KS 67002 (US); GREINER, Glenn, P., Daytona Beach, FL 32114 (US)
(74) Representative: Hofstetter, Schurack & Partner
(86) International application number: PCT/US2013/037409
(87) International publication number: WO 2014/137365

(56) References cited:
- US-A1- 2008 166 934
- US-A1- 2008 184 906
- US-A1- 2010 083 631
- US-A1- 2010 188 304
- US-A1- 2011 168 118
- US-A1- 2012 025 032
- US-A1- 2012 209 456

## Description

### Technical Field

Embodiments of the invention generally relate to hybrid aircraft and to a method for in flight operation of said hybrid aircraft.

### Background

Propeller driven aircraft traditionally rely upon an internal combustion engine to power the propeller. The internal combustion engine is fueled by petroleum which emits carbon dioxide into the atmosphere. To reduce the dependency on petroleum fuel and its byproduct emission into the atmosphere, alternative propulsion means, such as electric motors, are being researched. This alternative device needs to provide sufficient power, at a minimum, to sustain level cruise flight at altitude. This alternative device should also be capable of incorporation into an existing aircraft as an independent power system.

Having an alternative power source will reduce the petroleum fuel consumed in addition to reducing the aircraft's noise. The duration of the flight using the electric motor system will be dependent upon the capacity of the battery system. US 2012/0209456 A1 teaches an unmanned aerial vehicle including an electric motor mounted alongside an internal combustion engine, and discloses embodiments for transferring power between the internal combustion engine, electric motor, and a driveshaft to drive a propeller of the aircraft.

### Summary

The embodiments disclosed are directed to a hybrid clutch assembly for a hybrid airplane that can be powered by either an internal combustion engine or an electric motor. The two power systems function independently of one another, but are interconnected through the hybrid clutch assembly to power the propeller. The two systems are interconnected such that the internal combustion engine could power the propeller independently of the electric motor, and the electric motor could power the propeller independently of the internal combustion engine. This can be achieved using a hybrid clutch assembly that allows the two systems to operate in parallel.

In the present invention, a hybrid aircraft according to claim 1 and a method for in flight operation of such an aircraft according to claim 8 are provided.

In an exemplary embodiment, a propeller driven aircraft can be powered by either an internal combustion engine or an electric motor in a parallel hybrid system. The hybrid aircraft can takeoff with the internal combustion engine and climb to a cruising altitude. The internal combustion engine can then be turned off and the electric motor turned on to power the aircraft's propeller at altitude. The aircraft is capable of alternating operation between the electric motor and internal combustion engine as often as required at altitude. The aircraft can be landed using either the internal combustion engine or the electric motor. The transition of power from the internal combustion engine to the electric motor and back to the internal combustion engine is performed through a hybrid clutch assembly that interconnects the internal combustion engine propeller flange to the propeller driveshaft. The electric motor is connected to this hybrid clutch assembly through belts and sheaves. The electric motor throttle is controlled in the cockpit.

In an exemplary embodiment, a hybrid clutch assembly is inserted between an internal combustion engine and the propeller of an aircraft to provide a hybrid-powered aircraft. The clutch assembly allows a direct current (DC) electric motor to be attached to the hybrid clutch assembly using drive belts. The hybrid clutch assembly allows the internal combustion engine to transmit power to the aircraft's propeller and freely spin the electric motor. The electric motor can transmit power to the aircraft's propeller without turning the internal combustion engine. The hybrid clutch assembly independently allows either the internal combustion engine or the electric motor in parallel to power the aircraft's propeller.

The hybrid clutch assembly, in an exemplary embodiment, includes a hybrid clutch, drive belt housing, a hybrid clutch assembly shaft, and an adapter plate. The hybrid clutch is connected to the drive belt housing using a hybrid clutch assembly shaft. The adapter plate enables connection of the hybrid clutch to the internal combustion engine propeller flange. The drive belt housing enables connection of the hybrid clutch to the propeller. The electric motor is connected to the drive belt housing using drive belts.

### Brief Description of the Drawings

These and other advantages and aspects of the embodiments of the disclosure will become apparent and more readily appreciated from the following detailed description of the embodiments taken in conjunction with the accompanying drawings, as follows.
Fig. 1 illustrates a hybrid propulsion system including the internal combustion engine, electric motor, propeller and hybrid clutch assembly in accordance with an exemplary embodiment of the invention.
Fig. 2 illustrates a layout of the internal combustion engine, electric motor, propeller, and hybrid clutch assembly in an aircraft fuselage in accordance with an exemplary embodiment of the invention.
Fig. 3 illustrates the battery modules and master controller unit (MCU) for powering the electric motor in accordance with an exemplary embodiment of the invention.
Fig. 4 illustrates the hybrid propulsion system of Fig. 1 further including the master controller unit and cockpit control panel/linear potentiometer in accordance with an exemplary embodiment of the invention.
Fig. 5 illustrates an exploded view of the hybrid clutch assembly in accordance with an exemplary embodiment.
Fig. 6 illustrates a cross-sectional view of the hybrid clutch assembly in accordance with an exemplary embodiment.
Fig. 7 illustrates a generic view of a typical commercially available off-the-shelf hybrid clutch that can be used in exemplary embodiments.
Fig. 8 illustrates a detail view of the adapter plate that is needed to interconnect the internal combustion engine propeller flange to the hybrid clutch outer race in accordance with an exemplary embodiment.
Fig 9 is a detail view of the drive belt housing that interconnects the electric motor to the hybrid clutch assembly shaft in accordance with an exemplary embodiment.
Fig. 10 illustrates a detail view of the hybrid clutch assembly shaft that interconnects the hybrid clutch to the drive belt housing in accordance with an exemplary embodiment.

### Detailed Description

The following detailed description is provided as an enabling teaching of embodiments of the invention. Those skilled in the relevant art will recognize that many changes can be made to the embodiments described, while still obtaining the beneficial results. It will also be apparent that some of the desired benefits of the embodiments described can be obtained by selecting some of the features of the embodiments without utilizing other features. Accordingly, those who work in the art will recognize that many modifications and adaptations to the embodiments described are possible and may even be desirable in certain circumstances. Thus, the following description is provided as illustrative of the principles of the invention and not in limitation thereof, since the scope of the invention is defined by the claims.

Embodiments of the invention are directed to hybrid-powered aircraft that include both an internal combustion engine and a direct current (DC) electric motor. The electric motor is added to the aircraft in order to provide power to the propeller at altitude and maintain level flight without the need for the internal combustion engine. The electric motor system is independent of the internal combustion engine system, but must also be connected to the propeller's driveshaft in such a way so that either the internal combustion engine or the electric motor can power the airplane's propeller. The system allows power transmission from either the internal combustion engine or the electric motor in parallel. The operator of the aircraft can switch back and forth between the internal combustion engine and the electric motor in flight or on the ground. The electric motor spins freely while the internal combustion engine transmits power to the propeller and the internal combustion engine is bypassed while the electric motor transmits power to the propeller. To increase the redundancy of the system, multiple drive belts are used to transmit power from the electric motor to the propeller. The hybrid clutch assembly, in exemplary embodiments, provides a method of transmitting power independently from an internal combustion engine or an electric motor to the same propeller or propeller drive shaft.

In one embodiment, an internal combustion engine powered airplane, with a driveshaft to power a single propeller, can be modified to include an electric motor. The two power systems could be interconnected using a hybrid clutch assembly such that the internal combustion engine can power the propeller independently of the electric motor, and the electric motor can power the propeller independently of the internal combustion engine. This can be achieved using a hybrid clutch assembly that allows the two systems to operate in parallel.

In one embodiment, an existing airplane, with an internal combustion engine internally mounted aft of the pilot within the fuselage, can be modified. The airplane's existing driveshaft can be connected to the engine's propeller flange via a spline coupler and flexible disc. The existing driveshaft can travel forward to a pulley system located forward of the pilot. The pulley system serves as a minor gear ratio reduction in addition to allowing for propeller clearance with the ground.

In one embodiment, to increase the efficiency of the airplane, the internal combustion engine can be replaced with a more efficient engine reducing its fuel consumption. The hybrid clutch assembly can be directly connected to the engine's propeller flange. The original driveshaft can then be connected to this hybrid clutch assembly using the spline coupler and a flexible disc now attached to the hybrid clutch assembly. The engine replacement in this embodiment may require the need to shorten the driveshaft unless the propeller can be mounted further forward.

The hybrid clutch assembly has a drive belt housing that allows an electric motor to be connected to it. The electric motor can then be connected to the internal combustion engine using brackets and turnbuckles. The electric motor can be connected to the hybrid clutch assembly by drive belts.

The hybrid clutch assembly contains a hybrid clutch, a drive belt housing, a hybrid clutch assembly shaft and an adapter plate. The hybrid clutch is connected to the drive belt housing using a hybrid clutch assembly shaft. The adapter plate allows for the connection of the hybrid clutch to the internal combustion engine propeller flange. The drive belt housing allows for the connection of the hybrid clutch to the propeller. The drive belt housing also allows the electric motor to be connected to the drive belt housing using drive belts.

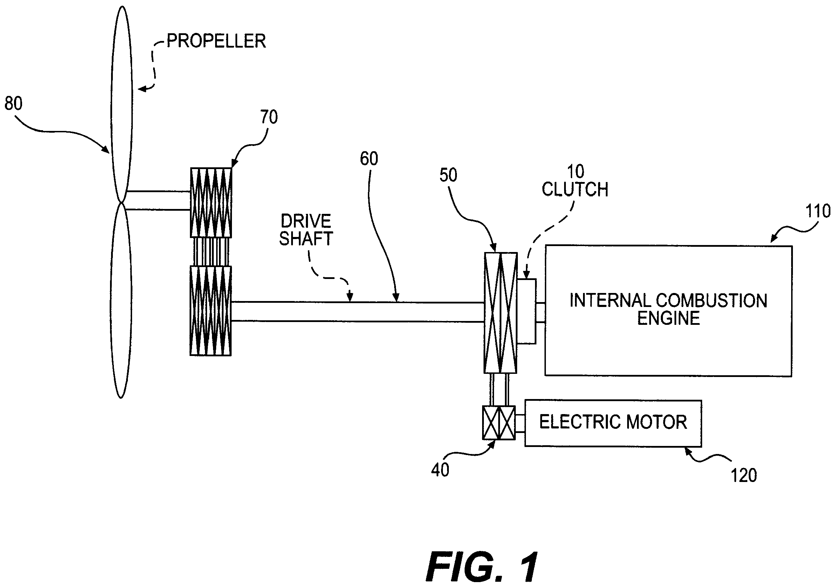

Fig. 1 illustrates a hybrid propulsion system for a light single engine airplane design with a forward-mounted propeller in an exemplary embodiment. The propulsion system includes an internal combustion engine 110 which is connected to an electric motor 120 through a hybrid clutch 10 and pulley system 40, 50 and 70. The hybrid clutch 10 is connected to the internal combustion engine propeller flange and is attached to a drive belt housing 50 that is then connected to a sheave 40 which is mounted to the electric motor shaft. Connected to the hybrid clutch 10 and the drive belt housing 50 that is mounted onto the internal combustion engine propeller flange is the driveshaft 60 that translates power to the propeller 80. Positioned between the driveshaft 60 and the propeller 80 could be a pulley system 70 that translates power to the propeller 80 that is not in line with the driveshaft 60.

In an exemplary embodiment, the electric motor 120 can be mounted to the internal combustion engine 110 by means of brackets and turnbuckles. The turnbuckles allow the electric motor sheave 40 to move toward the drive belt housing 50 in order to easily replace the belts connecting the two together. The electric motor 120 can be connected to the internal combustion engine 110 in order to ensure that the two systems vibrate and move together.

In one embodiment, a spline connects the driveshaft 60 to the drive belt housing 50 that is connected to the hybrid clutch 10 and the internal combustion engine 110. The style of the electric motor sheave 40 and drive belt housing 50 needs to be the same and their size is different, depending upon the revolutions per minute (rpm) output by each system and the final rpm desired at the propeller 80. The belts used are based upon the type of the electric motor sheave 40 and drive belt housing 50. The pulleys 70 may use a different number and type of belts.

The driveshaft 60 can be adjusted/made to any length. The electric motor sheave 40 and drive belt housing 50 can be made any size and can be made to have any number/type of belts. The pulleys in the pulley system 70 can be made any size and can be made to use any number/type of belts.

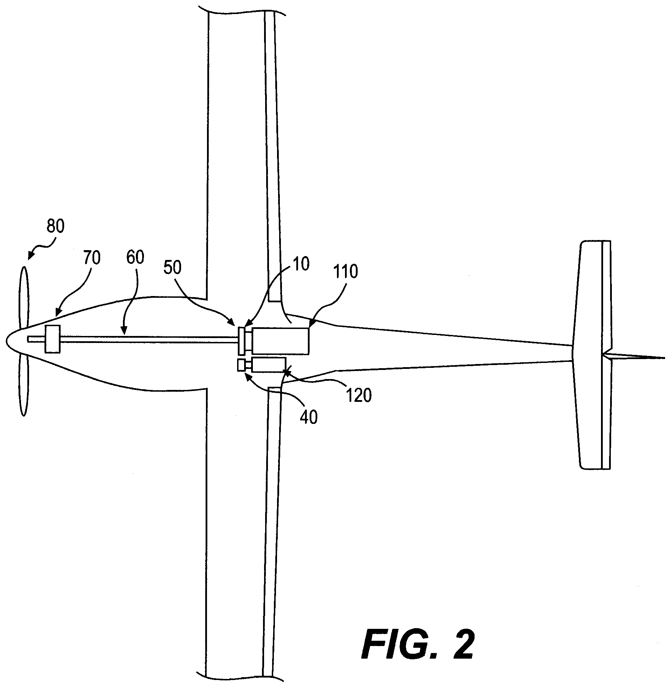

Fig. 2 illustrates a layout of the internal combustion engine 110, electric motor 120, propeller 80, and hybrid clutch and pulley assembly in an airplane's fuselage in an exemplary embodiment. If the propeller 80 can be positioned in-line with the driveshaft 60 then the pulley system 70 can be eliminated from the overall propulsion system.

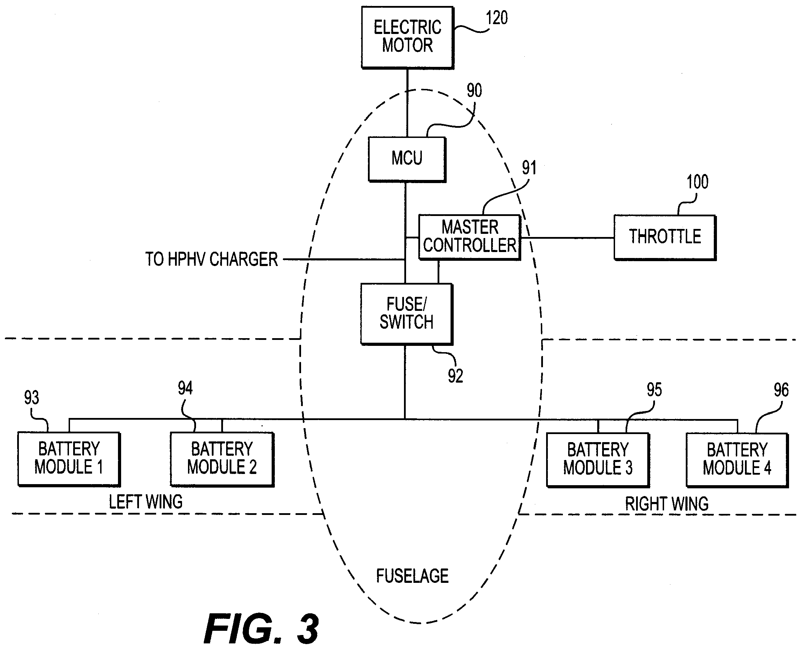

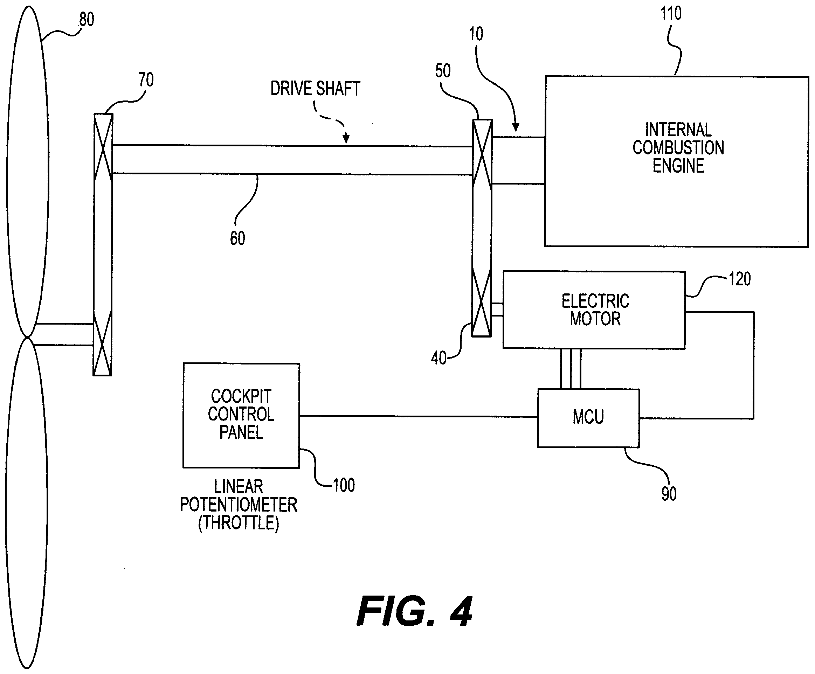

In exemplary embodiments, as further illustrated in Figs. 3 - 4, several battery modules 93, 94, 95, 96 are combined together to provide the proper voltage to the motor controller unit 90 in order to power the electric motor 120. A linear potentiometer (throttle) can be integrated into the cockpit control panel 100 to regulate the electric motor speed. Four battery modules can be placed in the wings, two in the left wing 93, 94 and two in the right wing 95, 96, and a fifth battery module (not shown) can be placed in the fuselage aft of the internal combustion engine.

In alternate embodiments, for airplanes having internal combustion engines 110 that are mounted in the nose area and in which the engine location cannot be moved, the hybrid clutch assembly can be attached to the internal combustion engine propeller flange and the propeller 80 mounted to the hybrid clutch assembly. The electric motor 120 is then mounted to the internal combustion engine 110 and drive belts attached between the drive belt housing 50 and the electric motor sheave 40. The nose cowling is then extended or a new one made to encompass the space displaced by the hybrid clutch assembly.

These and other alternative embodiments allow the airplane to be flown using either an internal combustion engine 110 or an electric motor 120, or by switching from one system to the other system in flight. Alternation of power from one system to the other will not cause the airplane to lose cruise altitude or cruise speed.

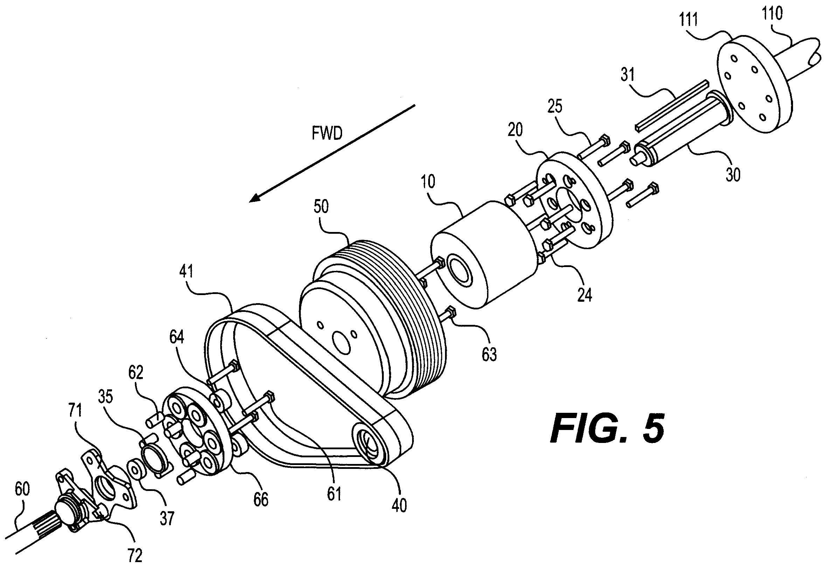

Fig. 5 illustrates an exploded view of the hybrid clutch assembly in an exemplary embodiment. This view details the hybrid clutch assembly that can be inserted between the internal combustion engine 110 and a propeller drive shaft 60. The hybrid clutch 10 could be a commercially available off-the-shelf component having an outer race and an inner race. When the outer race of the hybrid clutch rotates clockwise, the inner race rotates clockwise. When the inner race rotates clockwise, the outer race does not rotate. This is the fundamental operation of a hybrid clutch.

With further reference to Figs. 5 - 6, a clutch-flange adapter plate 20 connects the bolt pattern of engine propeller flange 111 to the outer race bolt pattern of the clutch 10. The clutch-flange adapter plate 20 also functions as a forward offset to properly align the drive belt housing 50 with the electric motor sheave 40. The clutch-flange adapter plate 20 has countersunk slots on the forward side to receive the flange bolts 24 whose hexagonal heads are seated into the slots to attach the hybrid clutch assembly to the engine propeller flange 111. The flange bolts 24 are inserted prior to the clutch-flange adapter plate 20 being bolted to the aft side of the hybrid clutch 10 using clutch bolts 25. A hardened square keyway 31 in pressed into a keyway cutout of the hybrid clutch assembly shaft 30, then pushed through the clutch-flange adapter plate 20 and slid into the hybrid clutch 10 until the aft collar 33 of the hybrid clutch assembly shaft 30 is flush with the inner race of the hybrid clutch 10.

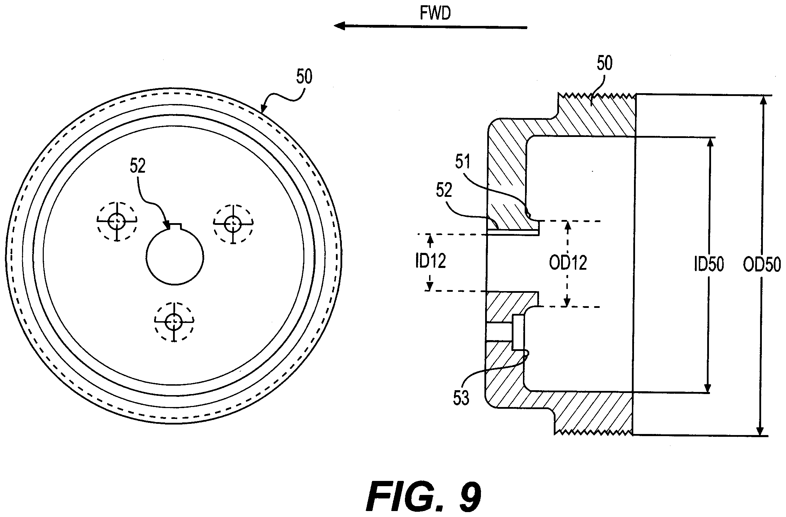

As shown in Fig. 9, the drive belt housing 50 includes a bored-out inner collar to match the diameter of the hybrid clutch assembly shaft 30 that includes a square keyway cutout 52 to match the hardened square keyway 31. The inner diameter of the drive belt housing 50 is greater than the outer diameter of the hybrid clutch 10 providing sufficient clearance and airflow circulation. The outer diameter of the drive belt housing 50 provides the correct revolutions per minute (rpm) transmission from the electric motor sheave 40 to the propeller shaft 60. Drive belt grooves are also positioned on the drive belt housing 50 providing additional flexibility for proper alignment with the electric motor sheave 40.

The flex disc coupler bolts 61 are inserted through the flex disc 66 with their inserts 62 prior to flex disc 66 being mounted to the drive belt housing 50. The flex disc 66 is a standard aircraft part. Flex disc housing bolts 63 are then inserted into the drive belt housing 50 followed by the flex disc housing spacers 64 in order to offset the flex disc 66 from the drive belt housing 50. This provides clearance for the hexagonal heads of the flex disc coupler bolts 61. The flex disc 66 is then slid onto the flex disc housing bolts 63 with their inserts 62. Proper nuts (not shown) are added to the flex disc housing bolts 63 and tightened to the required torque specification.

The drive belt housing 50 and flex disc 66 assembly is then slid onto the hybrid clutch assembly shaft 30 aligning its keyway insert to the shaft's hardened square keyway 31. This assembly is secured with a snap ring 35. A spherical ball bushing 37 is then inserted onto the end of the collar of the hybrid clutch assembly shaft 30 providing centering capability for the coupler centering hub 71. The coupler centering hub 71 and the spline coupler 72 are standard aircraft parts and are slid onto the flex disc coupler bolts 61 with proper nuts (not shown) and tightened to the required torque specifications. This structure completes the hybrid clutch assembly.

The hybrid clutch assembly flange bolts 24 are used to mount the hybrid clutch assembly onto the engine propeller flange 111 with proper nuts (not shown) and tightened to the required torque specifications. The electric motor 120 must be adjustable towards the drive belt housing 50 allowing the drive belts 41 to be slipped over the drive belt housing 50 and electric motor sheave 40. Next, the electric motor 120 is adjusted away from the drive belt housing 50 providing proper belt tension with electric motor sheave 40. The spline of propeller drive shaft 60 is then inserted into the spline coupler 72. This interconnects the engine 110 and electric motor 120 in parallel with the propeller drive shaft 60.

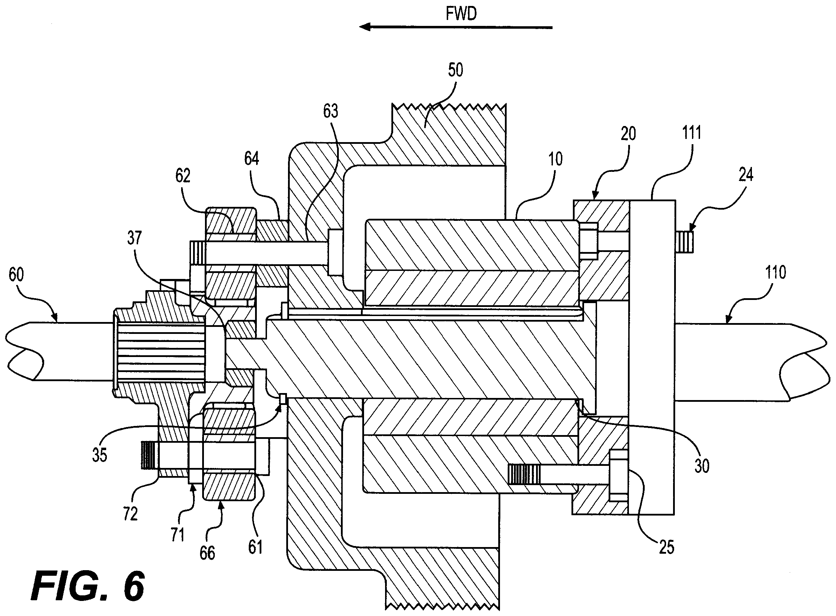

Fig. 6 illustrates a cross-sectional view of the hybrid clutch assembly in an exemplary embodiment. The hybrid clutch 10 is the central component with the flange bolts 24 inserted into the adapter plate 20 prior to the clutch bolts 25 attaching the adapter plate 20 to the outer race of the hybrid clutch 10. The flex disc coupler bolts 61 and inserts 62 are slid into the flex disc 66 prior to the housing bolts 63 being inserted into the drive belt housing 50 followed by the spacers 64 and flex disc 66. The hybrid clutch assembly shaft 30 and keyway 31 interconnect the inner race of the hybrid clutch 10 with the drive belt housing 50 and flex disc 66. The snap ring 35 secures these items onto the hybrid clutch assembly shaft 30. The bearing 37 is placed on the end collar of the hybrid clutch assembly shaft 30 and then the coupler centering hub 71 and spline coupler 72 are slid onto the flex disc coupler bolts 61 and secured with nuts (not shown). Next, the hybrid clutch assembly flange bolts 24 are inserted into the holes of engine propeller flange 111 and secured. The drive belts 41 are added and tensioned followed by the propeller drive shaft 60 being slid into the spline coupler 72.

Once the propeller is attached to the propeller drive shaft 60, the propeller can be rotated in a clockwise direction to ensure the drive belt housing 50, drive belts 41, and electric motor sheave 40 rotate freely. Rotation of the propeller in a counterclockwise rotation should lock the hybrid clutch and rotate the engine.

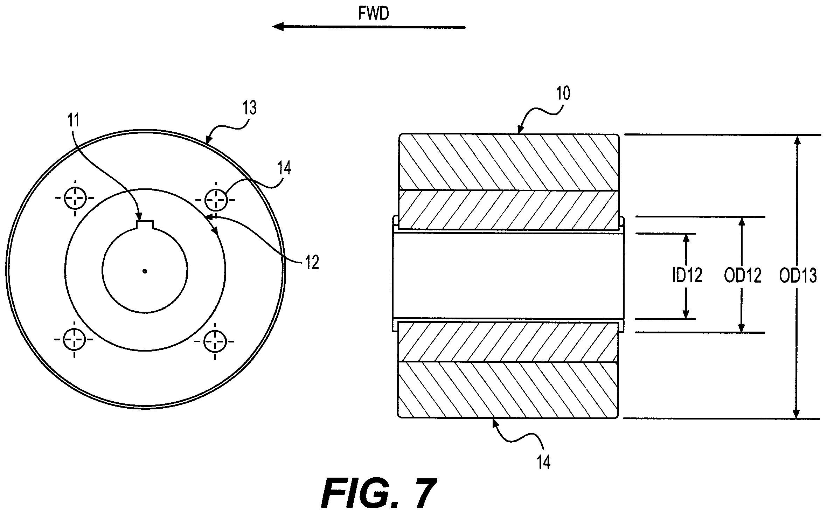

Fig. 7 illustrates the structure of a commercially available off-the-self hybrid clutch. The hybrid clutch internal mechanism varies and may be oil-filled for lubrication of the internal mechanisms. The hybrid clutch can have an inner race 12 and an outer race 13. As the inner race 12 rotates clockwise the outer race 13 will not rotate. Hence, the term hybrid clutch. As the outer race 13 rotates clockwise the internal mechanisms will lock the inner race 12 causing it to rotate clockwise. This figure shows free rotation of the inner race 12 in a clockwise direction looking at the aft side of the hybrid clutch 10 in a forward direction. This rotation is in the proper direction for the propeller to produce thrust. The inner race 12 has an inner diameter, designated as ID12, with a square keyway slot 11 for the hybrid clutch assembly shaft 30 and its square keyway 31 to be slid into. The inner race 12 has an outer diameter designated as OD12. The hybrid clutch 10 has mounting holes 14 on the aft side of the outer race 13. The mounting holes 14 allow the flange bolts 25 to mount the clutch-flange adapter plate 20 to the hybrid clutch 10. The outer race 13 of hybrid clutch 10 has an outside diameter designated as OD13.

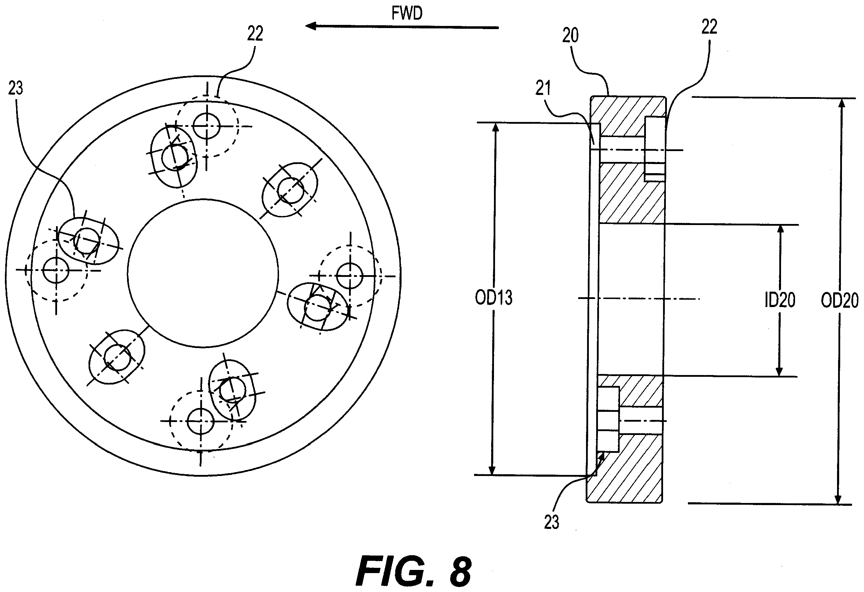

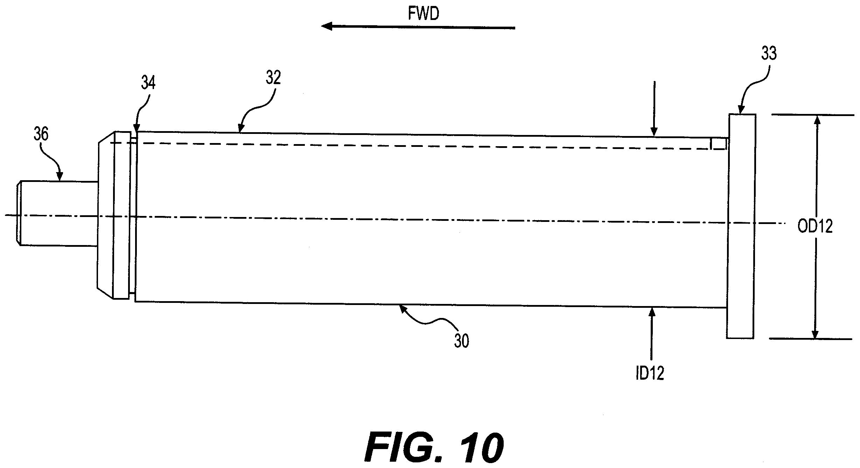

Fig. 8 illustrates the clutch-flange adapter plate 20 that enables the interconnection of the hybrid clutch assembly, in particular, the hybrid clutch 10 to the internal combustion engine propeller flange 111 in an exemplary embodiment. The minimum thickness of the clutch-flange adapter plate 20 must be sufficient such that the heads of flange bolts 24 and the heads of clutch bolts 25 are countersunk into the clutch-flange adapter plate 20 providing a flush mount on both sides. The outside diameter of the clutch-flange adapter plate 20, designated OD20, should be the same diameter as the diameter of internal combustion engine propeller flange 111. The clutch-flange adapter plate 20 has an inner diameter, designated ID20, which is larger than the collar of hybrid clutch assembly shaft 30. The collar is labeled with reference number 33 in Fig 10. The clutch-flange adapter plate 20 has a recess bore, designated as OD13, that is slightly larger than the outside diameter of the hybrid clutch 10 providing proper centering and alignment. Countersink slots 23 enable the hexagonal head flange bolts 24 to be securely seated in place. The flange bolts 24 must be inserted into the clutch-flange adapter plate 20 prior to mounting the clutch-flange adapter plate 20 to the hybrid clutch 10. The diameter of the countersink holes 22 must be wide enough for the hexagonal head and socket of clutch bolts 25 to fit in order to securely mount the clutch-flange adapter plate 20 onto the hybrid clutch 10. A thread locking solvent should be used on the clutch bolts 25 and the bolts should be tightened to the required torque specifications. This creates the clutch-adapter assembly in exemplary embodiments.

Fig. 9 illustrates the drive belt housing 50 that transmits power from the electric motor sheave 40 using drive belts 41 to rotate the propeller driveshaft 60 in an exemplary embodiment. The drive belt housing 50 has an internal diameter, designated by ID50, which must be larger than the outside diameter OD13 of hybrid clutch 10. This clearance allows air circulation between the drive belt housing 50 and the hybrid clutch 10. The drive belt housing 50 has an inner collar 51 with an internal diameter, designated as ID12, and a square keyway 52 that is slid onto the hybrid clutch assembly shaft 30 and aligned with its square keyway 31. The outside diameter of drive belt housing 50, designated as OD50, in conjunction with the diameter of electric motor sheave 40 provides the desired rotational speed of the propeller shaft 60. The drive belt housing collar 51 provides sufficient separation between the drive belt housing 50 and the hybrid clutch 10. This separation provides additional clearance between the flex disc housing bolts 63 and the hybrid clutch 10. Since the flex disc bolts 63 are recessed into the drive belt housing 50, the countersinks 53 must provide sufficient access for the hexagonal head and socket of flex disc housing bolt 63 to fit. This creates the flex-disc-housing assembly.

Fig. 10 illustrates the hybrid clutch assembly shaft 30 having a keyway slot along its length 32 for a hardened square keyway 31 that interlocks the clutch-adapter assembly and the flex-disc-housing assembly in an exemplary embodiment. The diameter of the collar 33 of hybrid clutch assembly shaft 30, designated as OD12, should be the same diameter as the outer diameter OD12 of inner race 12 of hybrid clutch 10. The inner diameter ID20 of adapter plate 20 must be larger than the diameter OD12 of collar 33 of hybrid clutch assembly shaft 30. A snap ring 35 installed in the groove 34 at the forward end of the hybrid clutch assembly shaft 30 secures the hybrid clutch assembly. There is also a collar 36 at this end of the hybrid clutch assembly shaft 30 for the spherical ball bushing 37 to be seated. This provides additional alignment for the coupler centering hub 71 and spline coupler 72 when attached to the flex disc 66.

The hybrid clutch assembly shaft 30 with hardened square keyway 31 is slid through the inner diameter ID20 of adapter plate 20 into the clutch-adapter assembly aligning the keyways until the collar 33 of hybrid clutch assembly shaft 30 is flush with the inner race 12 of hybrid clutch 10. The flex-disc-housing assembly is then slid onto the hybrid clutch assembly shaft 30 until the inner collar 51 of drive belt housing 50 is flush with the hybrid clutch 10. The clutch assembly groove 34 at the forward end of the hybrid clutch assembly shaft 30 should be flush with the drive belt housing 50 allowing the snap ring 35 to be installed. The spherical ball bushing 37 is then seated onto the collar 36 of hybrid clutch assembly shaft 30.

To complete the hybrid clutch assembly, the coupler centering hub 71 is slid onto the flex disc coupler bolts 61 that are protruding through the flex disc 66 that will encapsulate the spherical ball bushing 37. The propeller shaft spline coupler 72 is then slid onto the flex disc coupler bolts 61 and proper nuts (not shown) are added and tightened to the required torque specifications.

In exemplary embodiments, following completion of the hybrid clutch assembly process, the hybrid clutch assembly is bolted to the engine propeller flange 111 using the exposed flange bolts 24. Nuts are added and tightened to the required torque specifications. The electric motor 120 is rotated towards the hybrid clutch assembly and the drive belts 41 are slid over the drive belt housing 50 and the electric motor sheave 40. The electric motor 120 is then adjusted away from the hybrid clutch assembly providing proper belt tension. The spline of propeller shaft 60 is then inserted into the spline coupler 72 completing the assembly process.

In alternate embodiments, if space is not a concern, the drive belt housing 50 illustrated in Figs. 5, 6, and 9 can be sized differently to account for various desired rotational speeds at the propeller shaft 60 based on the diameter of electric motor sheave 40. The number of belts, type of belt, and tooth pattern for drive belts 41 can all vary.

In some embodiments, the propeller shaft 60 may need to be shortened to accommodate the length of the hybrid clutch assembly. The electric motor 120 in these embodiments can be positioned differently than illustrated in the figures due to space limitation. The propeller shaft 60 may be eliminated if the aircraft's propeller is to be directly connected to the hybrid clutch assembly. These and other alternative embodiments may allow the hybrid clutch assembly to be installed requiring minimum alterations to the aircraft.

In operation, the internal combustion engine 110 provides the required power to drive the propeller 80 enabling the airplane to takeoff and climb to a cruising altitude. Once the airplane is at cruising altitude, the electrical system of the electric motor 120 can be activated and the battery management system can be energized. As the internal combustion engine power is reduced (throttled back), the battery management system power for the electric motor is increased (throttled up). Once the electric motor is at the power required to maintain level flight, altitude, and speed, the internal combustion engine can be turned off. The electric motor throttle 100 can then be adjusted as needed in order to maintain cruise speed and altitude.

The process can be reversed so as to transition from operation with power supplied by the electric motor 120 to power supplied from the internal combustion engine 110. The electric motor throttle 100 is decreased and the internal combustion engine 110 is restarted. When the internal combustion engine is on, the electric motor 120 and the battery management system are turned off and the internal combustion engine throttled up to maintain cruise speed and altitude. The process of alternating power from the internal combustion engine 110 to electric motor 120 and back to the internal combustion engine 110 can be repeated multiple times in the air or on the ground, dependent upon the available power from the battery management system (i.e., energy remaining within the battery modules 93, 94, 95, 96). Due to the battery system's charging voltage requirement, the battery system can be recharged in flight by the alternator of the internal combustion engine 110. Either the internal combustion engine 110 or the electric motor 120 can be used for the descent and landing portion of the flight.

The disclosed embodiments of the hybrid clutch assembly allow an internal combustion engine 110 and a electric motor 120, operating in parallel, to independently transmit power to the aircraft's propeller 80. In doing so, the internal combustion engine 110 will freely spin the electric motor 120 with little loss of power when the engine's power is transmitted to the propeller 80. The electric motor 120 transmits its power to the propeller 80 bypassing the internal combustion engine 110 with little loss of power.

The corresponding structures, materials, acts, and equivalents of all means plus function elements in any claims below are intended to include any structure, material, or acts for performing the function in combination with other claim elements as specifically claimed.

Those skilled in the art will appreciate that many modifications to the exemplary embodiments are possible without departing from the scope of the present invention. In addition, it is possible to use some of the features of the embodiments disclosed without the corresponding use of the other features. Accordingly, the foregoing description of the exemplary embodiments is provided for the purpose of illustrating the principles of the invention, and not in limitation thereof, since the scope of the invention is defined solely by the appended claims.

## Claims

1. A hybrid aircraft, comprising:
a driveshaft (60);
a propeller (80) coupled to the driveshaft (60) so as to be driven thereby;
an internal combustion engine (110) mounted to the driveshaft (60) to provide power to the aircraft;
an electric motor (120) mounted to the internal combustion engine (110), the electric motor (120) providing power to the aircraft independently of and parallel to the power provided by the internal combustion engine (110);
a hybrid assembly attached to a propeller flange (111) of the internal combustion engine (110), the hybrid assembly connecting the internal combustion engine (110) and the electric motor (120) to the driveshaft (60), and comprising an internal combustion engine sheave (50) and an electrical motor sheave (40), at least one drive belt (41) engaging the sheaves (50, 40) so as to translate power from the electric motor (120) to the driveshaft (60), and a hybrid clutch (10) attached to the internal combustion engine sheave (50), arranged along the driveshaft (60) adjacent the internal combustion engine (110), and disposed between the internal combustion engine sheave (50) and the internal combustion engine (110), wherein the internal combustion engine sheave (50) and electrical motor sheave (40) are different in size and wherein the hybrid assembly enables the propeller (80) to be driven by power provided by the internal combustion engine (110) or the electric motor (120) or a combination of both.

2. The hybrid aircraft of claim 1, wherein the hybrid clutch is attached to a first sheave of the hybrid assembly that is mounted on the driveshaft to transmit power to the propeller.

3. The hybrid aircraft of claim 1, further comprising a plurality of batteries (93, 94, 95, 96) to provide voltage to a motor controller (90) to power the electric motor (120).

4. The hybrid aircraft of claim 1, wherein the electric motor (120) is mounted to the internal combustion engine (110) using a plurality of tumbuckles.

5. The hybrid aircraft of claim 1, further comprising a motor controller (90) to control operation of the electric motor (120).

6. The hybrid aircraft of claim 1, further comprising a spline (71) connecting the driveshaft (60) to the internal combustion engine sheave (50) of the hybrid assembly.

7. The hybrid aircraft claim 1, further comprising a linear potentiometer integrated into a cockpit control panel (100) to regulate a speed of the electric motor (120).

8. A method for in flight operation of a hybrid aircraft as claimed in any previous claims, having an internal combustion engine (110) mounted and an electric motor (120), the method comprising the steps of:
activating an electrical system of the electric motor (120);
energizing a battery management system to control operation of the electric motor (120);
decreasing an internal combustion engine (110) throttle power level;
increasing an electric motor (120) throttle power level;
turning off the internal combustion engine (110); and
adjusting the electric motor (120) throttle power level to maintain a speed and a cruising altitude of the aircraft,
wherein the hybrid aircraft comprises a hybrid assembly interconnecting the internal combustion engine (110) and electric motor (120) to a driveshaft (60), the hybrid assembly including a belt housing (50) including at least one drive belt (41) mounted on a plurality of sheaves (50, 40) to connect the electric motor (120) to the driveshaft (60) on which the internal combustion engine (110) is mounted, and a hybrid clutch (10) that is attached to a first sheave (50) of the plurality of sheaves (40, 50) mounted on the driveshaft (60) and that is disposed between the first sheave (50) and the internal combustion engine (110), wherein the plurality of sheaves further comprises a second sheave driven by the electric motor and coupled to the first sheave so as to translate power for the electric motor to the driveshaft through operation of the hybrid clutch, with the first and second sheaves being different in size.

9. The method of claim 8, further comprising transitioning from operation with power supplied by the electric motor (120) to power generated by the internal combustion engine (110).

10. The method of claim 9, wherein transitioning from operation with power supplied by the electric motor (120) comprises:
decreasing the electric motor (120) throttle power level;
restarting the internal combustion engine (110);
increasing the internal combustion engine (110) throttle power level; and
turning off the electric motor (120) and battery management system.

11. The method of claim 10, further comprising switching between operation with power supplied by the electric motor (120) and power generated by the internal combustion engine (110) dependent upon the energy supplied from a battery module (93, 94, 95, 96).

12. The method of claim 11, further comprising using either the internal combustion engine (110) or the electric motor (120) for a descent and a landing portion of a flight.

13. The method of claim 8, further comprising:
activating a battery module (93, 94, 95, 96) of plurality of battery modules (93, 94, 95, 96) to provide to power the electric motor (120) in response to a determination that the hybrid aircraft has reached a cruising altitude; and
after activating the battery module to provide power the electric motor (120), reducing power supplied to the internal combustion engine (110) while increasing power provided to the electric motor (120) so that the internal combustion engine (110) can be turned off.

## Patentansprüche

1. Hybridflugzeug, das umfasst:
eine Antriebswelle (60);
einen Propeller (80), der mit der Antriebswelle (60) gekoppelt ist, so dass er durch diese angetrieben wird;
eine Brennkraftmaschine (110), die an der Antriebswelle (60) montiert ist, um Leistung zum Flugzeug zu liefern;
einen Elektromotor (120), der an der Brennkraftmaschine (110) montiert ist, wobei der Elektromotor (120) Leistung zum Flugzeug unabhängig von und parallel zur Leistung, die durch die Brennkraftmaschine (110) geliefert wird, liefert;
eine Hybridanordnung, die an einem Propellerflansch (111) der Brennkraftmaschine (110) befestigt ist, wobei die Hybridanordnung die Brennkraftmaschine (110) und den Elektromotor (120) mit der Antriebswelle (60) verbindet, und eine Brennkraftmaschinenlaufrolle (50) und eine Elektromotorlaufrolle (40), mindestens einen Antriebsriemen (41), der mit den Laufrollen (50, 40) in Eingriff steht, um Leistung vom Elektromotor (120) zur Antriebswelle (60) zu übersetzen, und eine Hybridkupplung (10), die an der Brennkraftmaschinenlaufrolle (50) befestigt ist, entlang der Antriebswelle (60) benachbart zur Brennkraftmaschine (110) angeordnet ist und zwischen der Brennkraftmaschinenlaufrolle (50) und der Brennkraftmaschine (110) angeordnet ist, umfasst, wobei die Brennkraftmaschinenlaufrolle (50) und die Elektromotorlaufrolle (40) in der Größe unterschiedlich sind, und
wobei die Hybridanordnung ermöglicht, dass der Propeller (80) durch Leistung angetrieben wird, die durch die Brennkraftmaschine (110) oder den Elektromotor (120) oder eine Kombination von beiden bereitgestellt wird.

2. Hybridflugzeug nach Anspruch 1, wobei die Hybridkupplung an einer ersten Laufrolle der Hybridanordnung befestigt ist, die an der Antriebswelle montiert ist, um Leistung zum Propeller zu übertragen.

3. Hybridflugzeug nach Anspruch 1, das ferner eine Vielzahl von Batterien (93, 94, 95, 96) umfasst, um Spannung zu einer Motorsteuereinheit (90) zu liefern, um den Elektromotor (120) zu betreiben.

4. Hybridflugzeug nach Anspruch 1, wobei der Elektromotor (120) an der Brennkraftmaschine (110) unter Verwendung einer Vielzahl von Spannvorrichtungen montiert ist.

5. Hybridflugzeug nach Anspruch 1, das ferner eine Motorsteuereinheit (90) umfasst, um den Betrieb des Elektromotors (120) zu steuern.

6. Hybridflugzeug nach Anspruch 1, das ferner einen Keil (71) umfasst, der die Antriebswelle (60) mit der Brennkraftmaschinenlaufrolle (50) der Hybridanordnung verbindet.

7. Hybridflugzeug nach Anspruch 1, das ferner ein lineares Potentiometer umfasst, das in ein Cockpitbedienfeld (100) integriert ist, um eine Drehzahl des Elektromotors (120) zu regulieren.

8. Verfahren für den Flugbetrieb eines Hybridflugzeugs nach einem der vorangehenden Ansprüche mit einer montierten Brennkraftmaschine (110) und einem Elektromotor (120), wobei das Verfahren die Schritte umfasst:
Aktivieren eines elektrischen Systems des Elektromotors (120);
Ansteuern eines Batteriemanagementsystems, um den Betrieb des Elektromotors (120) zu steuern;
Verringern eines Drosselleistungspegels der Brennkraftmaschine (110);
Erhöhen eines Drosselleistungspegels des Elektromotors (120);
Abschalten der Brennkraftmaschine (110); und
Einstellen des Drosselleistungspegels des Elektromotors (120), um eine Geschwindigkeit und eine Reiseflughöhe des Flugzeugs aufrechtzuerhalten,
wobei das Hybridflugzeug eine Hybridanordnung umfasst, die die Brennkraftmaschine (110) und den Elektromotor (120) mit einer Antriebswelle (60) verbindet, wobei die Hybridanordnung ein Riemengehäuse (50) mit mindestens einem Antriebsriemen (41), der an einer Vielzahl von Laufrollen (50, 40) montiert ist, um den Elektromotor (120) mit der Antriebswelle (60) zu verbinden, an der die Brennkraftmaschine (110) montiert ist, und eine Hybridkupplung (10), die an einer ersten Laufrolle (50) der Vielzahl von Laufrollen (40, 50) befestigt ist, die an der Antriebswelle (60) montiert sind, und die zwischen der ersten Laufrolle (50) und der Brennkraftmaschine (110) angeordnet ist, umfasst, wobei die Vielzahl von Laufrollen ferner eine zweite Laufrolle umfasst, die durch den Elektromotor angetrieben wird und mit der ersten Laufrolle gekoppelt ist, um Leistung für den Elektromotor zur Antriebswelle durch den Betrieb der Hybridkupplung zu übersetzen, wobei die erste und die zweite Laufrolle in der Größe unterschiedlich sind.

9. Verfahren nach Anspruch 8, das ferner den Übergang vom Betrieb mit Leistung, die durch den Elektromotor (120) geliefert wird, zu Leistung, die durch die Brennkraftmaschine (110) erzeugt wird, umfasst.

10. Verfahren nach Anspruch 9, wobei der Übergang vom Betrieb mit Leistung, die durch den Elektromotor (120) geliefert wird, umfasst:
Verringern des Drosselleistungspegels des Elektromotors (120);
Neustarten der Brennkraftmaschine (110);
Erhöhen des Drosselleistungspegels der Brennkraftmaschine (110); und
Abschalten des Elektromotors (120) und des Batteriemanagementsystems.

11. Verfahren nach Anspruch 10, das ferner das Umschalten zwischen dem Betrieb mit Leistung, die durch den Elektromotor (120) geliefert wird, und Leistung, die durch die Brennkraftmaschine (110) erzeugt wird, in Abhängigkeit von der Energie, die von einem Batteriemodul (93, 94, 95, 96) zugeführt wird, umfasst.

12. Verfahren nach Anspruch 11, das ferner die Verwendung entweder der Brennkraftmaschine (110) oder des Elektromotors (120) für einen Sinkflug- und Landeteil eines Fluges umfasst.

13. Verfahren nach Anspruch 8, das ferner umfasst:
Aktivieren eines Batteriemoduls (93, 94, 95, 96) einer Vielzahl von Batteriemodulen (93, 94, 95, 96), um das Betreiben des Elektromotors (120) in Reaktion auf eine Bestimmung, dass das Hybridflugzeug eine Reiseflughöhe erreicht hat, vorzusehen; und
nach dem Aktivieren des Batteriemoduls, um Leistung zum Elektromotor (120) zu liefern, Verringern der zur Brennkraftmaschine (110) gelieferten Leistung, während die zum Elektromotor (120) gelieferte Leistung erhöht wird, so dass die Brennkraftmaschine (110) abgeschaltet werden kann.

## Revendications

1. Aéronef hybride, comprenant :
un arbre de transmission (60) ;
une hélice (80), couplée à l'arbre de transmission (60), de façon à être entraînée par ce moyen ;
un moteur à combustion interne (110), monté sur l'arbre de transmission (60), pour fournir de la puissance à l'aéronef,
un moteur électrique (120), monté sur le moteur à combustion interne (110), le moteur électrique (120) fournissant de la puissance à l'aéronef indépendamment de et parallèlement à la puissance, fournie par le moteur à combustion interne (110) ;
un assemblage hybride, fixée sur une flasque (111) de l'hélice du moteur à combustion interne (110), l'assemblage hybride raccordant le moteur à combustion interne (110) et le moteur électrique (120) à l'arbre de transmission (60) et comprenant une poulie (50) du moteur à combustion interne et une poulie (40) du moteur électrique, au moins une courroie d'entraînement (41) mettant en prise les poulies (50, 40), de façon à transférer la puissance depuis le moteur électrique (120) à l'arbre de transmission (60) et un embrayage hybride (10), fixé sur la poulie (50) du moteur à combustion interne, agencé le long de l'arbre de transmission (60), adjacent au moteur à combustion interne (110) et disposé entre la poulie (50) du moteur à combustion interne et le moteur à combustion interne (110),
dans lequel la poulie (50) du moteur à combustion interne et la poulie (40) du moteur électrique sont d'une taille différente et
dans lequel l'assemblage hybride permet à l'hélice (80) d'être entraînée par la puissance, fournie par le moteur à combustion interne (110) ou par le moteur électrique (120) ou par une combinaison des deux.

2. Aéronef hybride selon la revendication 1,
dans lequel l'embrayage hybride est fixé sur une première poulie de l'assemblage hybride, qui est monté sur l'arbre de transmission, pour transmettre la puissance à l'hélice.

3. Aéronef hybride selon la revendication 1, comprenant en outre une pluralité de batteries (93, 94, 95, 96), pour fournir de la tension à un contrôleur de moteur (90), pour propulser le moteur électrique (120).

4. Aéronef hybride selon la revendication 1,
dans lequel le moteur électrique (120) est monté sur le moteur à combustion interne (110), en utilisant une pluralité de tendeurs à vis.

5. Aéronef hybride selon la revendication 1, comprenant en outre un contrôleur de moteur (90), pour commander le fonctionnement du moteur électrique (120).

6. Aéronef hybride selon la revendication 1, comprenant en outre une cannelure (71), raccordant l'arbre de transmission (60) à la poulie (50) du moteur à combustion interne de l'assemblage hybride.

7. Aéronef hybride selon la revendication 1, comprenant en outre un potentiomètre linéaire, intégré dans un panneau de commande dans l'habitacle (100), pour réguler une vitesse du moteur électrique (120).

8. Procédé de fonctionnement en vol d'un aéronef hybride selon l'une quelconque des revendications précédentes, ayant un moteur à combustion interne (110) monté et un moteur électrique (120), le procédé comprenant les étapes, consistant à :
activer un système électrique du moteur électrique (120) ;
alimenter un système de gestion de batterie, pour commander le fonctionnement du moteur électrique (120) ;
réduire le niveau de puissance d'accélération d'un moteur à combustion interne (110) ;
augmenter un niveau de puissance d'accélération du moteur électrique (120) ;
arrêter le moteur à combustion interne (110) et
régler le niveau de puissance d'accélération du moteur électrique (120), pour maintenir une vitesse et une altitude de croisière de l'aéronef,
dans lequel l'aéronef hybride comprend un assemblage hybride, raccordant le moteur à combustion interne (110) et le moteur électrique (120) à un arbre de transmission (60), l'assemblage hybride comportant un boîtier de courroie (50), comportant au moins une courroie d'entraînement (41), montée sur une pluralité de poulies (50, 40), pour raccorder le moteur électrique (120) à l'arbre de transmission (60), sur lequel est monté le moteur à combustion interne (110) et un embrayage hybride (10), qui est fixé sur une première poulie (50) de la pluralité de poulies (40, 50), montée sur l'arbre de transmission (60) et qui est disposé entre la première poulie (50) et le moteur à combustion interne (110),
dans lequel la pluralité de poulies comprend en outre une seconde poulie, entraînée par le moteur électrique et couplée à la première poulie, de façon à transférer la puissance du moteur électrique à l'arbre de transmission par le biais du fonctionnement de l'embrayage hybride, les première et seconde poulies étant d'une taille différente.

9. Procédé selon la revendication 8, comprenant en outre l'opération, consistant à passer d'un fonctionnement avec la puissance, fournie par le moteur électrique (120) à la puissance, produite par le moteur à combustion interne (110).

10. Procédé selon la revendication 9,
dans lequel le passage du fonctionnement avec la puissance, fournie par le moteur électrique (120), comprend les opérations consistant à :
réduire le niveau de puissance d'accélération du moteur électrique (120) ;
relancer le moteur à combustion interne (110) ;
augmenter le niveau de puissance d'accélération du moteur à combustion interne (110) et
arrêter le moteur électrique (120) et le système de gestion des batteries.

11. Procédé selon la revendication 10, comprenant en outre l'opération, consistant à commuter entre le fonctionnement avec la puissance, fournie par le moteur électrique (120) et la puissance, produite par le moteur à combustion interne (110), en fonction de l'énergie, fournie par un module de batteries (93, 94, 95, 96).

12. Procédé selon la revendication 11, comprenant en outre l'opération, consistant à utiliser soit le moteur à combustion interne (110), soit le moteur électrique (120) pour une partie formant descente et atterrissage d'un vol.

13. Procédé selon la revendication 8, comprenant en outre les opérations, consistant à :
activer un module de batteries (93, 94, 95, 96) d'une pluralité de modules de batteries (93, 94, 95, 96), pour prévoir d'alimenter le moteur électrique (120), en réponse à une détermination, qui veut que l'aéronef hybride a atteint une altitude de croisière et
après avoir activé le module de batteries, pour prévoir d'alimenter le moteur électrique (120), réduire la puissance, fournie au moteur à combustion interne (110), tout en augmentant la puissance, fournie au moteur électrique (120), de sorte que le moteur à combustion interne (110) peut être arrêté.
